Europäisches Patentamt

European Patent Office

Office européen des brevets

(11) Numéro de publication: **0 378 495**
**A1**

# (12) DEMANDE DE BREVET EUROPEEN

(21) Numéro de dépôt: **90420021.9**

(22) Date de dépôt: **12.01.90**

(51) Int. Cl.⁵: **A47B 46/00, A47J 45/02**

(30) Priorité: **12.01.89 FR 8900837**

(43) Date de publication de la demande:
**18.07.90 Bulletin 90/29**

(84) Etats contractants désignés:
**AT BE CH DE DK ES FR GB GR IT LI LU NL SE**

(71) Demandeur: **SOGAL INDUSTRIE FRANCHISE INDUSTRIELLE SOCIETE ANONYME S.I.F.I.S.A.**
**L'Esclavissat, Estillac**
**F-47310 Laplume(FR)**

(72) Inventeur: **Guerin, Georges**
**Domaine de Samazan**
**Aubiac, F-47310 Laplume(FR)**

(74) Mandataire: **Guerre, Dominique et al**
**Cabinet Germain et Maureau 20 Boulevard Eugéne Deruelle BP 3011**
**F-69392 Lyon Cédex 03(FR)**

(54) Dispositif de rangement suspendu.

(57) Dans l'ouverture (2a) d'une structure porteuse (I), une unité de rangement comporte un panneau articulé (4), en deux parties (4a) et (4b), la seconde étant liée et articulée à la structure porteuse par un système de suspension du type quadrilatère déformable, dont la première partie constitue une branche. Des moyens de rangement (5a, 5b) sont prévus sur les deux parties (4a et 4b) respectivement.

FIG.1

## DISPOSITIF DE RANGEMENT SUSPENDU

La présente invention concerne un dispositif de rangement destiné à occuper la partie supérieure d'un volume, par exemple d'une pièce d'habitation, affecté au rangement.

Selon le document US-C-4 699 437, on a déjà proposé un tel dispositif, comprenant, d'une part une structure porteuse d'extension plane et horizontale, constituée par deux poutres parallèles d'une pièce d'habitation, délimitant entre elles une ouverture ou volume affecté à un rangement et d'autre part, une unité de rangement se logeant à l'intérieur de ladite ouverture, articulée sur la structure porteuse, c'est-à-dire sur les deux poutres parallèles. Cette unité de rangement peut pivoter entre deux positions, à savoir l'une de fermeture, dans laquelle l'unité de rangement est intégrée dans le volume de rangement, c'est-à-dire entre les deux poutres, et obture l'ouverture disponible entre ces dernières, et une position d'ouverture, dans laquelle l'intérieur de l'unité de rangement est accessible à l'utilisateur. Quant à l'unité de rangement, elle comporte un système de suspension à quadrilatère déformable, constitué par deux liaisons ou suspentes parallèles, articulées de manière décalée sur la structure porteuse. Chaque liaison ou suspente est articulée, d'un côté sur la structure porteuse, c'est-à-dire une poutre, autour d'un axe horizontal, et d'un autre côté opposé sur plusieurs éléments de rangement, consistant en de simples planches ou rayonnages, également autour d'un axe horizontal.

Le fonctionnement d'un tel dispositif de rangement est alors le suivant :
- dans la position de fermeture, l'unité de rangement est escamotée dans le volume affecté au rangement, c'est-à-dire entre les deux poutres, en étant vérouillée sur ces dernières à une extrémité opposée à l'articulation sur la structure porteuse ; les rayonnages sont alors disposés en position horizontale entre les deux poutres
- dans la position d'ouverture, l'unité de rangement est pivotée en position verticale, de manière suspendue à la structure porteuse, c'est-à-dire aux deux poutres ; dans cette position, les rayonnages demeurent disposés en position verticale, et sont accessibles à l'utilisateur, du côté intérieur.

Un tel dispositif permet notamment d'utiliser au mieux la partie haute de tout volume d'habitation, souvent disponible mais inutilisée dans différents locaux tels que couloirs, toilettes, salles de bains, etc... Ce dispositif peut être intégré de manière appropriée, par exemple, par des suspentes ou tasseaux, dans la partie haute d'une pièces d'habitation, à partir du plafond. Il peut être aussi rapporté, à partir d'un plafond, pour former alors une retombée de plafond ou un faux plafond. Ce dispositif de rangement peut comporter une seule unité de rangement, ou plusieurs disposées de manière adjacente ou espacée.

Un tel dispositif présente néanmoins différents inconvénients :
- il ne permet pas de fermer l'ouverture d'accès au volume de rangement, au sens d'une fermeture jointive, et complètement intégrée à la structure porteuse
- la surface des rayonnages demeure individuellement limitée, et ne permet pas d'y stocker des objets encombrants, par exemple une valise ou un bagage
- le poids des objets stockés sur les différents rayonnages de l'unité de rangement accélère l'ouverture de cette dernière, vers le bas en position verticale, ce qui constitue un danger dans certains cas ; inversement la remontée vers le haut, en position de fermeture, de l'unité de rangement, constitue une opération pénible, voire impossible si les objets stockés ou rangés sont trop lourds.

La présente invention vise à remédier à tous ces inconvénients. L'invention a pour objet d'augmenter la surface d'au moins un élément de rangement, tout en intégrant mieux l'unité de rangement à laquelle il appartient dans la structure porteuse, et plus précisément son ouverture d'accès, et ceci en facilitant également la manoeuvre de l'unité de rangement, c'est-à-dire en la rendant relativement indépendante du poids stocké.

Selon la présente invention, l'unité de rangement comporte un panneau de fermeture, constitué d'au moins deux parties, jointives dans la position de fermeture de l'unité de rangement, et obturant dans ladite position, ensemble et horizontalement, l'ouverture d'accès dans la structure porteuse. Une première partie du panneau constitue ou est associée au quadrilatère déformable, du côté extérieur de l'unité de rangement. Une dernière ou deuxième partie du panneau, permettant un rangement du côté intérieur, constitue ou est associée à un élément du quadrilatère déformable, opposé à l'ouverture, et articulé sur les deux liaisons de suspension. Le côté intérieur des deux parties du panneau est accessible à l'utilisateur, dans la position d'ouverture de l'unité de rangement. Des moyens de rappel du panneau coopèrent par ailleurs avec le quadrilatère déformable, d'une part pour rappeler le panneau, avec l'unité de rangement dans sa position de fermeture, et d'autre part pour freiner son ouverture vers le bas.

Selon la présente invention, lorsque le panneau de fermeture est constitué de seulement deux parties, la surface de rangement de la deuxième partie du panneau peut alors représenter la moitié de la surface de l'ouverture d'accès dans la structure porteuse ; une telle surface facilite ou permet le rangement d'objets encombrants.

La présente invention est maintenant décrite par référence aux dessins annexes, dans lesquels :

- la figure 1 représente en coupe verticale un dispositif de rangement conforme à un premier mode d'exécution de l'invention, ce dispositif étant en position de fermeture ;

- la figure 2 représente une vue frontale selon la direction II de la figure 1 du dispositif représenté à cette dernière ;

- les figures 3 et 4 représentent le dispositif des figures 1 et 2, respectivement en position intermédiaire et d'ouverture ;

la figure 5 représente en coupe verticale et en position intermédiaire un deuxième mode d'exécution de l'invention ;

- la figure 6 représente un dispositif de rangement selon l'invention, comportant une pluralité d'unités de rangement disposées les unes à côté des autres, et alignées selon une ou plusieurs directions ;

- la figure 7 représente un dispositif de rangement identique à celui de la figure 5, mais dont les moyens de rangement sont mobiles en position.

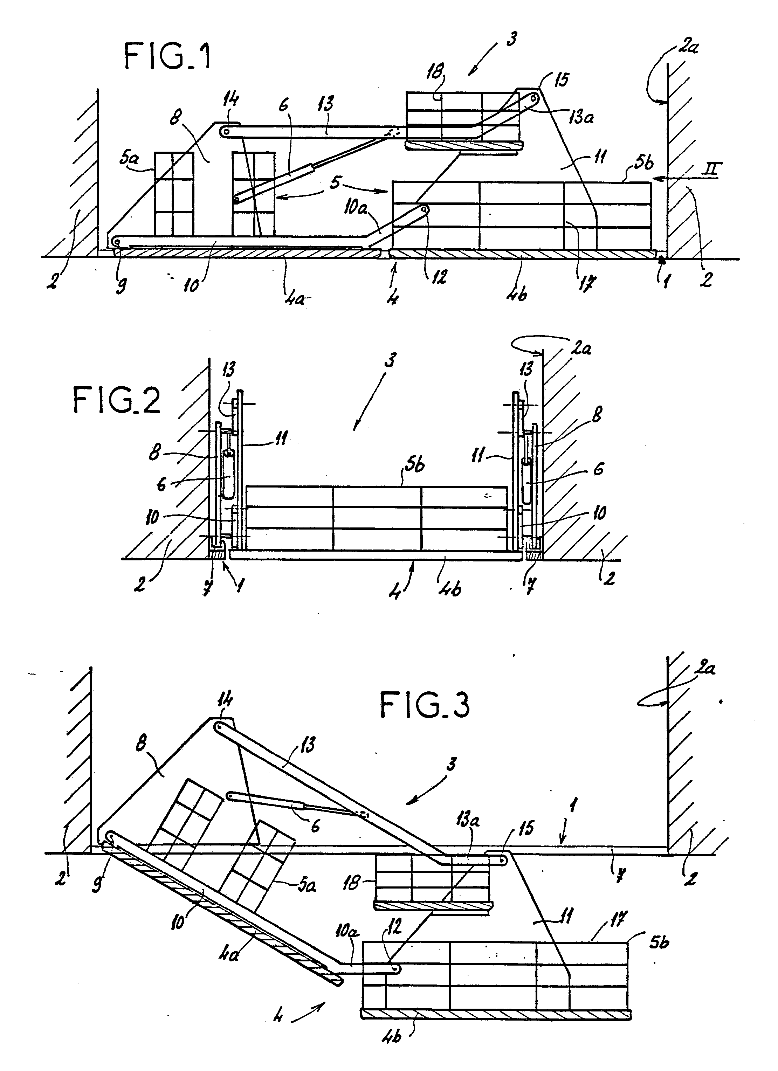

Conformément aux figures 1 et 2, un dispositif selon l'invention comporte essentiellement :
- une structure porteuse (1) d'extension plane et horizontale, fixée comme représenté à la figure 1 dans l'ouverture d'un décrochement parallélépipédique (2a) d'un plafond (2) ; cette structure porteuse délimite elle-même une autre ouverture inscrite dans la section horizontale du décrochement (2a) ;
- une unité de rangement (3) logée à l'intérieur de l'ouverture de la structure porteuse, comportant un panneau (4) séparé en deux parties distinctes (4a) et (4b), des moyens de rangement (5) agencés du côté intérieur du panneau, comportant des casiers en fil (5a) et (5b) distincts, distribués respectivement sur la première partie (4a) et la deuxième partie (4b) ;
- des moyens (6), consistant en un compas à gaz ou vérin de compensation, rappelant le panneau (4) dans sa position de fermeture, et freinant l'ouverture vers le bas dudit panneau.

La structure porteuse (1) comporte selon deux côtés parallèles du décrochement (2a), respectivement deux glissières métalliques (7) ayant chacune une section transversale en U, et ouvertes vers le haut. Ces deux glissières sont fixées de manière appropriée, par exemple par des vis, sur les deux flancs adjacents du décrochement (2a). Cette structure porteuse (1) comporte également deux flasques (8) verticaux, parallèles, chacun de forme sensiblement triangulaire. Chaque flasque (8) comporte un côté sensiblement horizontal, disposé de manière ferme mais réglable, à l'intérieur d'une glissière (7) correspondante.

En position de fermeture, et comme représenté à la figure 1, les deux parties (4a) et (4b) du panneau (4), jointives, obturent ensemble et horizontalement l'ouverture (2a) du plafond (2), et donc l'ouverture de la structure porteuse (1), à la manière d'un faux plafond. La forme et les dimensions rectangulaires des deux parties (2a) et (2b) sont donc adaptées à celles de l'ouverture (2a) du plafond (2).

Comme montré à la figure 3, chaque unité de rangement comporte un système de suspension à quadrilatère déformable, constitué de chaque côté de ladite unité, de deux liaisons parallèles (10) et (13) de suspension, articulées à une extrémité de manière décalée sur un flasque vertical (8). Chaque liaison (10, 13) est articulée, d'un côté sur la structure porteuse autour d'un axe horizontal (9, 14), et d'un autre côté opposé sur un élément de rangement (4b), (5b), formant la partie mobile du quadrilatère déformable, opposée à l'ouverture (2b) et à la partie fixe ou flasque (8).

La première partie (4a) du panneau est articulée sur la structure porteuse (1), et plus précisément sur les deux flasques (8), autour d'un axe horizontal matérialisé par les deux pivots alignés (9). Pour ce faire, les deux bras inférieurs (10) parallèles de liaison, disposés de part et d'autre du panneau (4), sont articulés à une extrémité sur les deux pivots (9) respectivement. Et la première partie (4a) du panneau (4) est fixée au contact des deux bras parallèles (10).

La deuxième partie (4b) du panneau (4) est liée à la structure porteuse (1), et plus précisément aux deux flasques (8), par le système précité de suspension à quadrilatère ou prisme déformable. Ce système particulier intègre la première partie (4a) du panneau, comme décrit ci-après:

Ce système de suspension comporte plus précisément, conformément à la figure 1 :
- deux équerres (11) disposées verticalement de part et d'autre de la deuxième partie (4b), parallèles aux deux flasques (8) respectivement, de forme triangulaire, et dont un côté horizontal est fixé à la deuxième partie (4b) ;
- les deux bras inférieurs (10) formant avec la première partie (4a) du panneau (4) un premier plan inférieur de suspension ; à cet effet, les deux bras (10) comportent chacun une partie inclinée (10a) vers le haut, et deux pivots (12) solidaires des deux équerres (11) respectivement déterminent un axe horizontal d'articulation de la deuxième partie (4b) du panneau (4), à l'extrémité des bras (10) opposée à l'axe d'articulation (9) de la première partie (4a) ;
- les deux bras supérieurs (13), disposés de part et d'autre du panneau (4) et parallèlement aux deux bras inférieurs (10) respectivement ; chaque bras (13) est articulé, à une extrémité à un pivot (14) situé au voisinage du sommet supérieur d'un flasque (8) et à l'autre extrémité par une partie inclinée (13a) vers le haut à un axe (15), situé au voisinage du sommet supérieur d'une équerre (11) ; les deux bras (13) délimitent ainsi un plan supérieur de suspension, articulé d'un côté à la structure porteuse (1), et plus précisément aux flasques (8), autour d'un axe horizontal matérialisé par les pivots (14) alignés, et de l'autre côté à la deuxième partie (4b) du panneau (4), et plus précisément aux équerres (11), autour d'un autre axe horizontal matérialisé par les pivots (15) alignés.

Les bras (10) et (13), espacés les uns des autres par paires, ont donc une forme et une longueur identiques.

Le moyen de rangement (5b) associé à la deuxième partie (4b) du panneau comporte des rayons ou bacs (17) et (18) étagés en hauteur.

Le moyen de rappel consiste en deux vérins (6), disposés de part et d'autre du panneau (4), dont l'extrémité fixe est articulée sur un flasque (8), et l'extrémité libre sur un point intermédiaire d'un bras (13).

Le fonctionnement d'un dispositif selon l'invention est illustré par les figures 1,3 et 4.

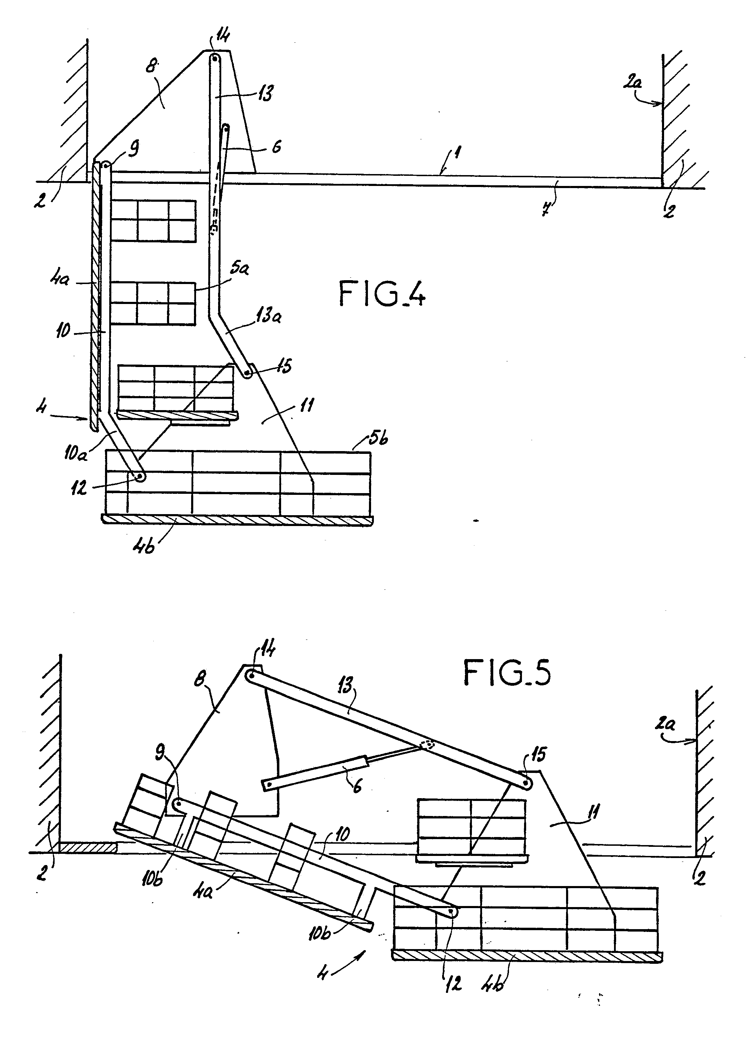

En passant de la position de fermeture (Figure 1) à la position d'ouverture (Figure 4), et en passant par une position intermédiaire (Figure 3), d'une part la première partie (4a) du panneau (4) pivote d'une position de fermeture horizontale à une position d'ouverture verticale, et d'autre part la deuxième partie (4b) descend du niveau supérieur de la structure porteuse à un niveau inférieur, tout en demeurant horizontale. Dans la position d'ouverture de la figure 4, l'intérieur du panneau (4) et donc des deux parties (4a) et (4b) est totalement accessible à l'utilisateur.

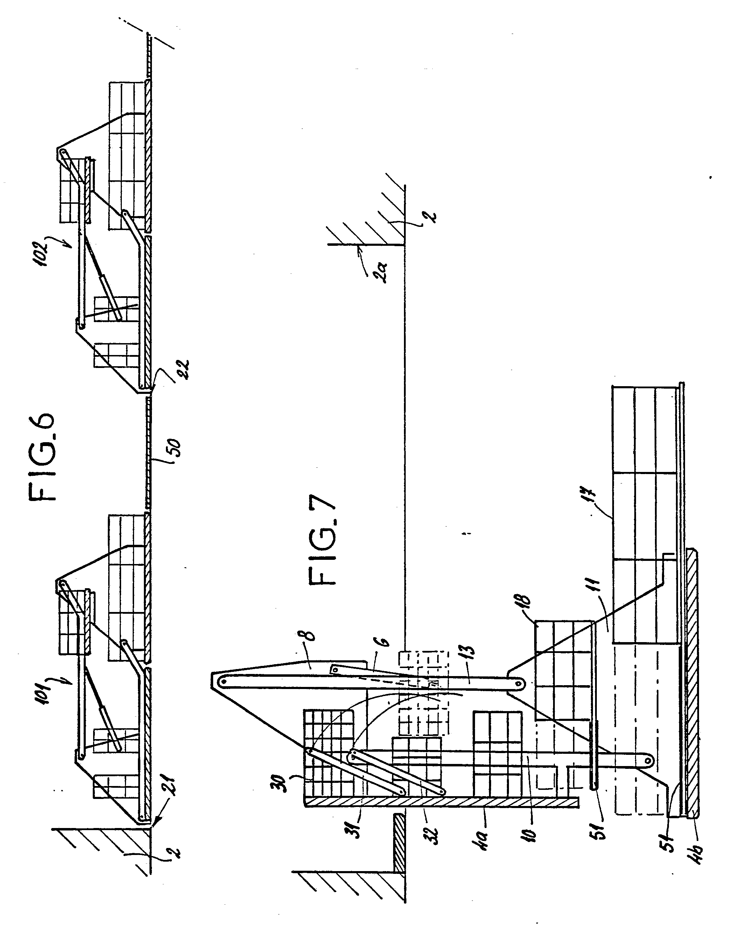

Le dispositif représenté à la figure 5 se distingue de celui décrit précédemment par les points suivants :
- tous les bras (10) et (13) sont droits, d'un point d'articulation (9) et (14) à l'autre (12) et (15),
- les bras inférieurs (10) sont disposés à distance de la première partie (4a) du panneau (4), par des montants perpendiculaires (10b).

Conformément à la figure 6, la structure porteuse (1) comporte une pluralité (21), (22), et alignées selon au moins une direction parallèle ou orthogonale à l'axe d'articulation des panneaux, en l'occurrence une seule direction orthogonale à l'axe d'articulation (9). Et des unités de rangement (101), (102), etc..., sont disposées dans des ouvertures (21), (22),... respectivement. Entre deux ouvertures (21), (22) consécutives, la structure porteuse (1) comporte un panneau horizontal fixe (50), ménageant au-dessus de lui un volume complémentaire de rangement, accessible par l'une ou l'autre desdites ouvertures adjacentes, dans la position d'ouverture du panneau correspondant.

Le dispositif selon la figure 7 permet une utilisation rationnelle et optimum de la partie supérieure d'un volume habitable.

Un dispositif selon la figure 7 comporte :
- sur la partie (4b) des moyens de rangement consistant en deux paniers (17) et (18), mobiles horizontalement sur des glissières (51),
- sur la partie (4a), un casier (30) de rangement susceptible de basculer vers le bas, dans la position d'ouverture, en restant horizontal, grâce à deux bras (31) et (32) parallèles, articulés d'un côté sur la partie (4a) du panneau (4) et de l'autre côté sur le casier (30).

La présente peut faire l'objet de nombreuses variantes d'exécution. En particulier, la structure porteuse peut se limiter aux seuls flasques (8), lesquels peuvent être fixés directement sur les parois du décrochement (2a) du plafond (2).

## Revendications

1. Dispositif de rangement, destiné à occuper la partie supérieure d'un volume affecté au rangement, comprenant d'une part une structure porteuse (1) d'extension plane et horizontale, délimitant une ouverture (2b), et d'autre part au moins une unité (3) de rangement logée à l'intérieur de ladite ouverture (2), articulée directement ou indirectement sur la structure porteuse, pouvant pivoter entre deux positions, à savoir l'une de fermeture (Figure 1), dans laquelle l'unité de rangement est intégrée dans le volume de rangement et obture l'ouverture (2b), et une position d'ouverture (Figure 4), dans laquelle l'intérieur de l'unité de rangement est accessible à l'utilisateur, chaque unité de rangement comportant un système de suspension à quadrilatère déformable, constitué par deux liaisons (10, 13) parallèles de suspension, articulées de manière décalée, chacune d'un côté sur la structure porteuse autour d'un axe horizontal (9, 14) et d'un autre côté opposé sur l'élément (4b) de rangement, également autour d'un axe (12, 15) horizontal, caractérisé en ce que l'unité de rangement comporte un panneau (4) de fermeture, constitué d'au moins deux parties (4a) (4b), jointives dans la position de fermeture, et obturant dans cette position, ensemble et horizontalement l'ouverture (2b) dans la structure porteuse (1), une première partie (4a) dudit panneau constituant ou étant associée au quadrilatère déformable, du côté extérieur, et une dernière partie (4b) dudit panneau, permettant un rangement du côté intérieur, constituant ou étant associée à un élément du quadrilatère déformable, opposé à l'ouverture (2b), et articulé sur les deux liaisons (10, 13) de suspension, le côté intérieur des deux parties (2a, 2b) du panneau étant accessible à l'utilisateur, dans la position d'ouverture, et des moyens de rappel (6) du panneau coopèrent avec le quadrilatère déformable, d'une part pour rappeler le panneau dans sa position de fermeture, et d'autre part pour freiner son ouverture vers le bas.

2. Dispositif selon la revendication 1, caractérisé en ce que de part et d'autre du panneau (4), le système de suspension comporte deux bras (10, 13) parallèles, articulés chacun d'un côté (9, 14) sur la structure porteuse (1) et de l'autre côté (12, 15) sur la deuxième partie (4b) du panneau, les bras inférieurs (10) étant solidaires de la première partie (4a) du panneau.

3. Dispositif selon la revendication 2, caractérisé en ce que la structure porteuse (1) comporte deux flasques (8) disposés de part et d'autre de l'ouverture (2a), sur chacun desquels sont articulés de manière espacée deux bras (10, 13) du système de suspension.

4. Dispositif selon la revendication 3, caractérisé en ce que deux équerres (11) sont disposées de part et d'autre de la deuxième partie (4b) du panneau, et sur chaque équerre sont articulés de manière espacée deux bras (10, 13) du système de suspension.

5. Dispositif selon la revendication 4, caractérisé en ce que, de part et d'autre du système de suspension, les deux bras (10, 13) comportent chacun, du côté de la deuxième partie (4b) du panneau, une extrémité (10a, 13a) inclinée vers le haut, servant à la suspension de ladite deuxième partie, les bras inférieurs (10) étant au contact de la première partie (4a) du panneau (4).

6. Dispositif selon la revendication 4, caractérisé en ce que, de part et d'autre du système de suspension, les deux bras (10, 13) sont droits, d'un point d'articulation (9, 14) à l'autre (13, 15), les bras inférieurs (10) étant disposés à distance de la première partie (4a) du panneau, par des montants perpendiculaires (10b).

7. Dispositif selon la revendication 1, caractérisé en ce que la structure porteuse comporte une pluralité d'ouvertures (21,22) alignées selon au moins une direction, choisie parallèle ou orthogonale à l'axe d'articulation du panneau, et une pluralité d'unités de rangement (101, 102) sont disposées dans lesdites ouvertures respectivement.

8. Dispositif selon la revendication 1, caractérisé en ce que entre deux ouvertures (21, 22) consécutives, la structure porteuse (1) comporte un panneau horizontal fixe (50), ménageant au-dessus de lui un volume complémentaire de rangement, accessible par l'une ou l'autre desdites ouvertures adjacentes, dans la position d'ouverture de l'unité de rangement correspondante.

9. Dispositif selon la revendication 1, caractérisé en ce qu'un moyen de rangement (5b) associé à la deuxième partie (4b) du panneau (4) comporte deux rayons (17, 18) étagés en hauteur.

10. Dispositif selon la revendication 1, caractérisé en ce qu'un moyen de rangement (5b) associé à l'une ou l'autre des parties (4a, 4b) du panneau est mobile en position relative par rapport audit panneau.

FIG.1

FIG.2

FIG.3

FIG.4

FIG.5

FIG.6

101

102

2    21    50    22

FIG.7

30

31

8

32

6

2a

4a

2

10

13

51

18

11    17

51

4b

EP 0 378 495 A1

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5 ) |
|---|---|---|---|
| A, D | US-A-4699437 (GENEREAUX)<br>* colonne 4, ligne 65 – colonne 5, ligne 38; figures 4-7 *<br>--- | 1, 2, 7 | A47B46/00<br>A47J45/02 |
| A | GB-A-819138 (BRINT)<br>* le document en entier *<br>--- | 1 | |
| A | US-A-4275942 (STEIDL)<br>* le document en entier *<br>----- | 1 | |

| DOMAINES TECHNIQUES RECHERCHES (Int. Cl.5 ) |
|---|
| A47J<br>A47B |

Le présent rapport a été établi pour toutes les revendications

| Lieu de la recherche | Date d'achèvement de la recherche | Examinateur |
|---|---|---|
| LA HAYE | 12 MARS 1990 | MEINDERS H. |

EPO FORM 1503 03.82 (P0402)